# EUROPÄISCHE PATENTANMELDUNG

(11) **EP 3 327 373 A1**
(43) Veröffentlichungstag der Anmeldung: **30.05.2018**
(21) Anmeldenummer: 16201172.0
(22) Anmeldetag: 29.11.2016
(51) Int. Cl.: F24H 8/00

(54) **HEIZGERÄT**

(71) Anmelder: Bosch Termoteknik Isitma ve Klima Sanayi Ticaret Anonim Sirketi, 45030 Manisa (TR)
(72) Erfinder: Ak, Hakan, 45030 Manisa (TR); Cakmak, Mustafa Ali, 45030 Manisa (TR); Erdogan, Hasan Cosan, 1203 Bornova/Izmir (TR)
(74) Vertreter: Bee, Joachim

(57) **Zusammenfassung**

Die Erfindung geht aus von einem Heizgerät, insbesondere einem Kondensationsboiler, insbesondere einem Brennwertkessel, mit zumindest einem Gasbrenner (12a), mit zumindest einem dem Gasbrenner (12a) zugeordneten Primärwärmetauscher (14a) und mit zumindest einer dem Primärwärmetauscher (14a) nachgeschalteten Abgasleitung (16a; 16b).

Es wird vorgeschlagen, dass das Heizgerät zumindest einen mit der Abgasleitung (16a; 16b) thermisch verbundenen Sekundärwärmetauscher (18a; 18b) mit zumindest einer wendelförmigen Fluidleitung (20a; 20b) aufweist.

## Beschreibung

### Stand der Technik

Beispielsweise aus der DE 23 35 563 A1 oder aus der DE 27 17 105 A1 sind Zentralheizungsanlagen bekannt, die Restwärme aus bei einem Heizen entstehenden Rauchgasen zurückgewinnen. Bei besagten Zentralheizungen ist jeweils ein Wärmetauscher vorgesehen, der Wärme von den Rauchgasen auf ein Rücklaufwasser eines Zentralheizkreislaufs überträgt, ehe dieses Rücklaufwasser mittels eines Brenners erhitzt wird. Die Wärmetauscher sind jeweils in einem Ofenrohr mit einem Durchmesser im Bereich von 30 cm angeordnet, das von einem Heizkessel der entsprechenden Zentralheizung zu einem Schornstein führt und können beispielsweise als entsprechend große Spiralwärmetauscher ausgeführt sein. Derartige Wärmetauscher können in bestehende Zentralheizungssysteme eingebaut werden. Durch das Ofenrohr tretende Rauchgase erwärmen das Rücklaufwasser vor dessen Eintritt in den Heizkessel, wobei aufgrund dessen Temperatur vor Durchlaufen des entsprechenden Wärmetauschers keine Kondensation stattfindet.

Ferner ist beispielsweise aus der US 2006/0102106 A1 ein Kondensationsboiler mit einem Primärwärmetauscher, der einem Brenner zugeordnet ist, und einem unmittelbar hinter dem Primärwärmetauscher angeordneten Sekundärwärmetauscher, der einem entstehenden Abgas Restwärme mittels Kondensation entzieht, bekannt. Der Primärwärmetauscher und der Sekundärwärmetauscher sind in einem gemeinsamen Gehäuse angeordnet. Von dem Sekundärwärmetauscher wird das Abgas durch eine Abgasleitung aus dem gemeinsamen Gehäuse geleitet.

### Offenbarung der Erfindung

Die Erfindung geht aus von einem Heizgerät, insbesondere einem Kondensationsboiler, insbesondere einem Brennwertkessel, mit zumindest einem Gasbrenner, mit zumindest einem dem Gasbrenner zugeordneten Primärwärmetauscher und mit zumindest einer dem Primärwärmetauscher nachgeschalteten Abgasleitung.

Es wird vorgeschlagen, dass das Heizgerät zumindest einen mit der Abgasleitung thermisch verbundenen Sekundärwärmetauscher mit zumindest einer wendelförmigen Fluidleitung aufweist.

Insbesondere ist das Heizgerät zu einer Bereitstellung von Warmwasser vorgesehen, wobei unter "Warmwasser" in diesem Zusammenhang auch Heißwasser verstanden werden soll. Insbesondere soll unter "Warmwasser" erwärmter Trinkwasser verstanden werden. Alternativ oder zusätzlich ist denkbar, dass das Heizgerät zu einer Bereitstellung von Heizwasser, insbesondere für einen Heizkreislauf, vorzugsweise für einen Zentralheizkreislauf, vorgesehen ist. Vorteilhaft ist das Heizgerät als eine Gastherme ausgebildet, insbesondere als ein Kombiboiler. Vorzugsweise ist die Abgasleitung dem Gasbrenner insbesondere unmittelbar nachgeschaltet. Besonders bevorzugt ist die Abgasleitung zu einem Ableiten von Abgasen vorgesehen, welche der Gasbrenner bei einem Verbrennen eines Brenngases erzeugt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Vorteilhaft überträgt der Primärwärmetauscher in zumindest einem Normalbetriebszustand Wärme von dem Gasbrenner, insbesondere bei einer Verbrennung eines Heizgases in dem Gasbrenner entstehende Wärme, auf ein zu erwärmendes Wasser, insbesondere auf das Heizwasser und/oder auf das Warmwasser, zu übertragen, vorteilhaft zumindest teilweise mittels einer ersten Kondensation. Insbesondere ist der Primärwärmetauscher in einem Bereich einer Flamme des Gasbrenners angeordnet. Vorzugsweise weist das Heizgerät zumindest einen Zulauf und zumindest einen Ablauf auf, mittels derer das Heizgerät insbesondere in einen Wasserkreislauf eingebunden werden kann. Besonders bevorzugt ist der Zulauf mit dem Sekundärwärmetauscher verbunden. Vorteilhaft fließt das zu erwärmende Wasser in dem Normalbetriebszustand von dem Zulauf durch den Sekundärwärmetauscher und/oder von dem Sekundärwärmetauscher zu dem Primärwärmetauscher und/oder von dem Primärwärmetauscher zu dem Ablauf. Vorzugsweise ist der Sekundärwärmetauscher dazu vorgesehen, dem Abgas Wärme zu entziehen und diese zumindest teilweise, vorteilhaft zu wenigstens einem Großteil dem Heizwasser und/oder dem Warmwasser Wärme zuzuführen, vorteilhaft zumindest teilweise mittels einer zweiten Kondensation. Insbesondere ist der Sekundärwärmetauscher separat und/oder getrennt von dem Primärwärmetauscher ausgebildet und/oder von diesem beabstandet angeordnet. Insbesondere ist der Sekundärwärmetauscher als ein Kondensationswärmetauscher ausgebildet.

Vorteilhaft ist die wendelförmige Fluidleitung als eine Wasserleitung ausgebildet. Insbesondere folgt die wendelförmige Fluidleitung einem Verlauf, der wenigstens drei, vorteilhaft wenigstens vier und besonders vorteilhaft wenigstens fünf Wendelumläufe beschreibt. Vorzugsweise ist die wendelförmige Fluidleitung mit einer konstanten Steigung und/oder mit einer konstanten Krümmung versehen. Es ist aber auch denkbar, dass die wendelförmige Fluidleitung unterschiedliche Abschnitte, beispielsweise mit unterschiedlichem Leitungsdurchmesser und/oder unterschiedlicher Krümmung und/oder unterschiedlicher Steigung umfasst. Insbesondere ist denkbar, dass die Fluidleitung einem sich verjüngenden und/oder sich erweiternden Verlauf folgt. Ferner ist denkbar, dass die wendelförmige Fluidleitung in sich verschlungen und/oder doppelhelixförmig gewunden ist. Außerdem ist denkbar, dass die wendelförmige Fluidleitung entlang ihres Verlaufs Wellen beschreibt und/oder nach Art einer Doppelwendel, also einer zur Wendel geformten Wendel, ausgebildet ist.

Insbesondere weist die wendelförmige Fluidleitung eine Länge von wenigstens 0,5 m, vorteilhaft von wenigstens 1,0 m und besonders vorteilhaft von 1,2 m auf. Es sind aber je nach Anwendung auch gänzlich andere Längen denkbar, beispielsweise Längen von 2 m oder 3 m oder 5 m oder noch größere Längen oder auch deutlich kleinere Längen. Insbesondere weist die wendelförmige Fluidleitung einen, insbesondere konstanten, Durchmesser von wenigstens 5 mm, vorteilhaft von wenigstens 10 mm, besonders vorteilhaft von wenigstens 15 mm und/oder von höchstens 50 mm, vorteilhaft von höchstens 30 mm, besonders vorteilhaft von höchstens 20 mm und vorzugsweise von 16,5 mm auf.

Durch die erfindungsgemäße Ausgestaltung des Heizgeräts können vorteilhafte Eigenschaften hinsichtlich einer Kompaktheit und/oder eines hohen Wirkungsgrades erzielt werden. Ein Wärmetauscher zur Abgaswärmenutzung und/oder zur Kondensationswärmenutzung kann in vorteilhafter Weise bauraumeffizient eingesetzt werden. In vorteilhaften Weise kann ein Wirkungsgrad unter Ausnutzung einer zweiten Kondensation erhöht werden. Außerdem kann ein kostengünstiger Sekundärwärmetauscher für ein Heizgerät bereitgestellt werden. Ferner können vorteilhafte Eigenschaften hinsichtlich einer kostengünstigen und/oder einfachen Herstellung erzielt werden. Zudem kann ein Sekundärwärmetauscher in vorteilhafter Weise kompakt in einen Kombiboiler integriert werden. Weiterhin kann vorteilhaft eine Abgastemperatur reduziert werden. Ferner kann eine Emission von Treibhausgasen, insbesondere von Kohlenstoffdioxid, reduziert werden.

In einer vorteilhaften Ausgestaltung der Erfindung wird vorgeschlagen, dass die wendelförmige Fluidleitung zumindest teilweise, insbesondere vollständig, in der Abgasleitung angeordnet ist. Vorteilhaft entspricht ein Außendurchmesser einer Wendel, welche die wendelförmige Fluidleitung bildet, zumindest im Wesentlichen einem Innendurchmesser der Abgasleitung. Es ist aber auch denkbar, dass der Außendurchmesser der Wendel deutlich kleiner ist als der Innendurchmesser der Abgasleitung. Grundsätzlich kann die Abgasleitung rohrförmig ausgebildet sein. Es sind aber auch andere Geometrien denkbar. Insbesondere ist denkbar, dass der Sekundärwärmetauscher oder vorteilhaft ein Gehäuse des Sekundärwärmetauschers die Abgasleitung zumindest abschnittsweise ausbildet. Vorzugsweise weist der Sekundärwärmetauscher zumindest eine Zuleitung auf, die durch eine Wandung der Abgasleitung hindurch zu der wendeförmigen Fluidleitung führt. Besonders bevorzugt weist der Sekundärwärmetauscher zumindest eine Ableitung auf, die durch die Wandung der Abgasleitung hindurch von der wendelförmigen Fluidleitung, insbesondere von einem anderen Ende der wendelförmigen Fluidleitung, aus der Abgasleitung führt. Unter "zumindest im Wesentlichen" soll in diesem Zusammenhang insbesondere verstanden werden, dass eine Abweichung von einem vorgegebenen Wert insbesondere weniger als 15 %, vorzugsweise weniger als 10 % und besonders bevorzugt weniger als 5 % des vorgegebenen Werts entspricht. Hierdurch kann vorteilhaft eine hohe Kompaktheit erzielt werden. Ferner kann vorteilhaft ein effizienter Wärmeübertrag erzielt werden.

Eine vorteilhaft kompakte Bauweise kann erzielt werden, wenn das Heizgerät zumindest ein Gehäuse aufweist, welches den Gasbrenner, den Primärwärmetauscher und den Sekundärwärmetauscher sowie insbesondere die Abgasleitung zumindest teilweise, insbesondere vollständig umschließt. Vorteilhaft sind der Gasbrenner, der Primärwärmetauscher und der Sekundärwärmetauscher sowie insbesondere die Abgasleitung insbesondere vollständig innerhalb des Gehäuses angeordnet. Insbesondere weist das Gehäuse wenigstens einen Abgasanschluss auf, der mit einem externen Abgasrohr verbindbar ist. Vorteilhaft führt die Abgasleitung von dem Gasbrenner zu dem Abgasanschluss.

Ein hoher Wirkungsgrad und/oder ein effizienter Wärmeübertrag kann erzielt werden, wenn der Sekundärwärmetauscher zu einem Vorerwärmen eines Heizwassers und/oder eines Warmwassers vorgesehen ist. Insbesondere im Fall von Warmwasser ist der Sekundwärmetauscher insbesondere in dem Normalbetriebszustand dazu vorgesehen, kaltes Leitungswasser vorab zu erwärmen, ehe das vorerwärmte Wasser mittels des Gasbrenners und des Primärwärmetauschers auf eine Warmwassertemperatur erhitzt wird. Es ist auch denkbar, dass der Sekundärwärmetauscher zu einem Vorerwärmen von rücklaufendem Heizwasser vorgesehen ist, insbesondere falls der Sekundärwärmetauscher und/oder das Heizgerät Teil eines Heizkreislaufs sind.

Eine hohe Effizienz kann erzielt werden, wenn der Sekundärwärmetauscher das Heizwasser und/oder das Warmwasser in dem Normalbetriebszustand um wenigstens 2°C, vorteilhaft um wenigstens 2,5°C, besonders vorteilhaft um wenigstens 3°C und vorzugsweise um 3,2°C oder um einen größeren Betrag wie beispielsweise um 4°C oder um 5°C oder um 6°C erwärmt.

Außerdem wird vorgeschlagen, dass der Sekundärwärmetauscher in einem Bereich eines vertikal verlaufenden Abschnitts der Abgasleitung angeordnet ist. Insbesondere verläuft der vertikal verlaufende Abschnitt parallel zu einer Höhenrichtung des Heizgeräts. Insbesondere verläuft der vertikal verlaufende Abschnitt in dem Normalbetriebszustand in eine vertikale Richtung relativ zu einem Untergrund. Insbesondere strömt in dem Normalbetriebszustand das Abgas von unten durch den vertikal verlaufenden Abschnitt der Abgasleitung nach oben. Hierdurch kann ein verfügbarer Innenraum eines Heizgeräts effizient genutzt und/oder ein kompaktes Heizgerät zur Verfügung gestellt werden.

Zudem wird vorgeschlagen, dass das Heizgerät zumindest einen Kondensatablauf aufweist, über welchen in der Abgasleitung in einem Bereich des Sekundärwärmetauschers entstehendes Kondenswasser abführbar ist. Insbesondere weist die Abgasleitung den Kondensatablauf aus. Vorteilhaft ist der Kondensatablauf von einer Außenseite des Gehäuses her zugänglich. Insbesondere ist der Kondensatablauf unterhalb der wendelförmigen Fluidleitung und/oder unterhalb und/oder innerhalb des vertikal verlaufenden Abschnitts angeordnet. Hierdurch kann vorteilhaft eine einfache und/oder zuverlässige Wartung ermöglicht werden.

In einer bevorzugten Ausgestaltung der Erfindung wird vorgeschlagen, dass die wendelförmige Fluidleitung zumindest teilweise, vorteilhaft zu wenigstens einem Großteil, bevorzugt vollständig aus vorteilhaft rostfreien Stahl, insbesondere aus Edelstahl, ausgebildet ist. Unter dem Ausdruck "zu wenigstens einem Großteil" soll dabei insbesondere zu wenigstens 55 %, vorteilhaft zu wenigstens 65 %, vorzugsweise zu wenigstens 75 %, besonders bevorzugt zu wenigstens 85 % und besonders vorteilhaft zu wenigstens 95 %, insbesondere aber auch vollständig verstanden werden. Hierdurch können vorteilhaft Materialkosten reduziert werden. Ferner kann hierdurch eine einfache Herstellbarkeit eines Wärmetauschers mit einer flexibel anpassbaren Geometrie erzielt werden.

Alternativ ist auch denkbar, dass die wendelförmige Fluidleitung zumindest teilweise, zu wenigstens einem Großteil oder vollständig aus Aluminium und/oder aus Kupfer und/oder aus einem anderen geeigneten, insbesondere auch nichtmetallischen Material ausgebildet ist.

In einer besonders bevorzugten Ausgestaltung der Erfindung wird vorgeschlagen, dass die wendelförmige Fluidleitung zumindest teilweise makroskopisch insbesondere elastisch, vorteilhaft beschädigungsfrei verformbar ausgebildet ist. Insbesondere ist die wendelförmige Fluidleitung biegsam und/oder verbiegbar, vorteilhaft unter Aufbringen von Kräften, wie sie Menschen mit Armen und/oder Händen und/oder Fingern erzeugen können. Insbesondere kann ein Verlauf der wendelförmigen Fluidleitung mittels Biegens zumindest temporär oder auch dauerhaft verändert werden. Unter einem "makroskopisch verformbaren Objekt" soll dabei insbesondere ein Objekt verstanden werden, dessen Erstreckung entlang zumindest einer Richtung durch einen wirkenden Druck von höchstens 100 kN mm⁻², vorteilhaft von höchstens 10 kN mm⁻² und besonders vorteilhaft von höchstens 1 kN mm⁻² um wenigstens 1 %, vorteilhaft um wenigstens 5 %, besonders vorteilhaft um wenigstens 20 % und bevorzugt um wenigstens 50 % verändert werden kann, insbesondere beschädigungs- und/oder zerstörungsfrei. Das Objekt kann dabei insbesondere zumindest zwei Elemente aufweisen, die bei einer makroskopischen Verformung relativ zueinander bewegt werden. Hierdurch kann vorteilhaft ein Einbau eines Wärmetauschers erleichtert werden. Ferner kann hierdurch eine Geometrie bedarfsweise angepasst werden.

Außerdem betrifft die Erfindung ein Verfahren zur Herstellung des Heizgeräts, wobei die wendelförmige Fluidleitung bei einem Einbau zumindest vorübergehend makroskopisch verformt wird. Ein derartiges Verfahren ermöglicht einen Einbau eines Wärmetauschers in einfacher Weise, insbesondere an schwer zugänglichen Stellen.

Das erfindungsgemäße Heizgerät soll hierbei nicht auf die oben beschriebene Anwendung und Ausführungsform beschränkt sein. Insbesondere kann das erfindungsgemäße Heizgerät zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Heizgerät in einer schematischen Frontansicht,
- Fig. 2: eine Abgasleitung und einen Sekundärwärmetauscher des Heizgeräts in einer perspektivischen Darstellung,
- Fig. 3: eine Abgasleitung und den Sekundärwärmetauscher in einer schematischen Seitenansicht,
- Fig. 4: eine Abgasleitung und einen Sekundärwärmetauscher eines weiteren Heizgeräts in einer schematischen Seitenansicht und
- Fig. 5: den Sekundärwärmetauscher des weiteren Heizgeräts in einer perspektivischen Darstellung.

### Beschreibung der Ausführungsbeispiele

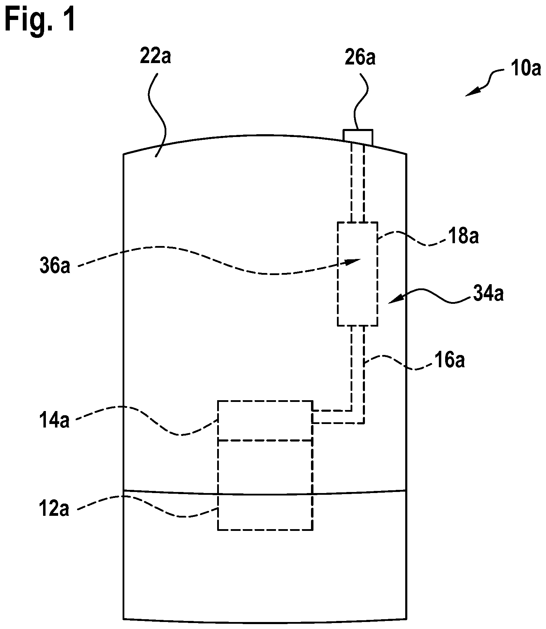

Die Figur 1 zeigt ein Heizgerät 10a in einer schematischen Frontansicht. Das Heizgerät 10a ist im vorliegenden Fall als ein Kombiboiler ausgebildet. Das Heizgerät 10a weist einen Gasbrenner 12a sowie einen dem Gasbrenner 12a zugeordneten Primärwärmetauscher 14a auf. Der Gasbrenner 12a und der Primärwärmetauscher 14a sind in der Figur 1 lediglich schematisch dargestellt. In einem Normalbetriebszustand überträgt der Primärwärmetauscher 14a von dem Gasbrenner 12a erzeugte Wärme auf Frischwasser, welches nach dessen Erwärmen als Warmwasser zur Verfügung gestellt wird. Alternativ oder zusätzlich ist denkbar, dass mittels des Gasbrenners 12a und des Primärwärmetauschers 14a Wasser, insbesondere Rücklaufwasser, eines Heizkreislaufs erhitzt wird.

Das Heizgerät 10a weist eine dem Primärwärmetauscher 14a nachgeschaltete Abgasleitung 16a auf. Die Abgasleitung 16a führt zu einem Abgasanschluss 26a des Heizgeräts 10a. Der Abgasanschluss 26a ist mit einer externen Abgasleitung, beispielsweise zu einem Schornstein, verbindbar.

Ferner weist das Heizgerät 10a einen mit der Abgasleitung 16a thermisch verbundenen Sekundärwärmetauscher 18a auf. Das Warmwasser und ggf. das Heizwasser wird/werden in dem Normalbetriebszustand mittels des Sekundärwärmetauschers 18a und des Primärwärmetauschers 14a erwärmt.

Das Heizgerät 10a weist ein Gehäuse 22a auf, welches den Gasbrenner 12a, den Primärwärmetauscher 14a und den Sekundärwärmetauscher 18a zumindest teilweise umschließt. Im vorliegenden Fall sind der Gasbrenner 12a, der Primärwärmetauscher 14a, der Sekundärwärmetauscher 18a sowie die Abgasleitung 16a innerhalb des Gehäuses 22a angeordnet. Das Gehäuse 22a weist den Abgasanschluss 26a auf. Ferner weist das Gehäuse 22a geeignete Wasseranschlüsse auf, die aus Gründen einer Übersichtlichkeit in der Figur 1 nicht dargestellt sind.

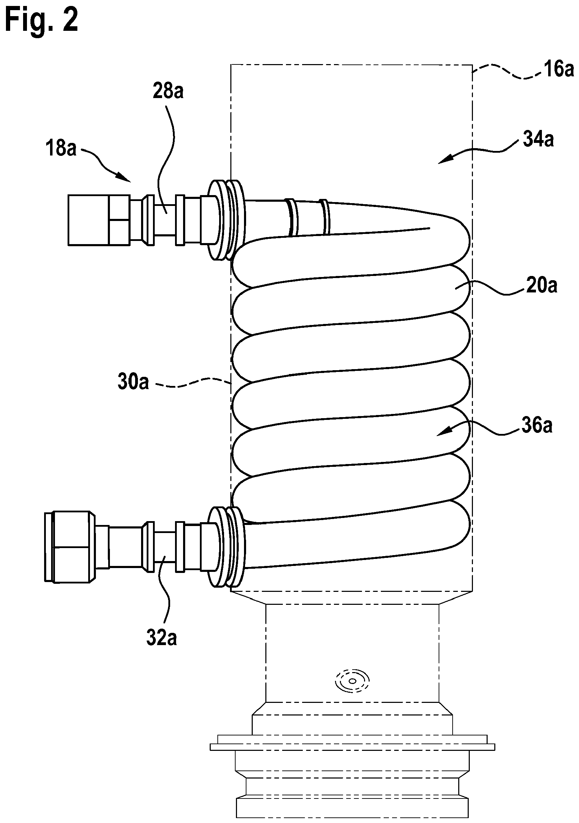

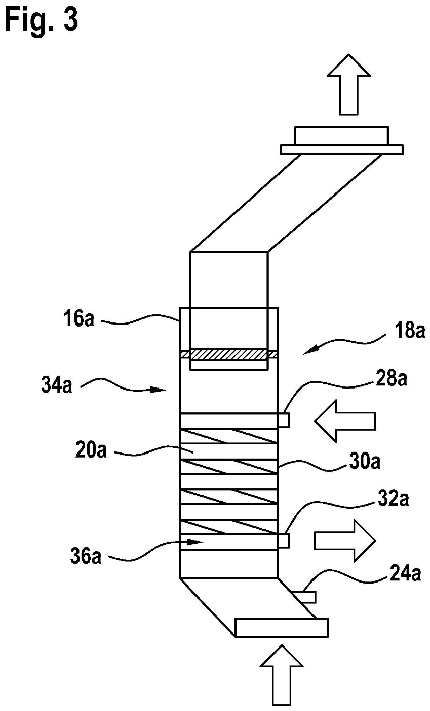

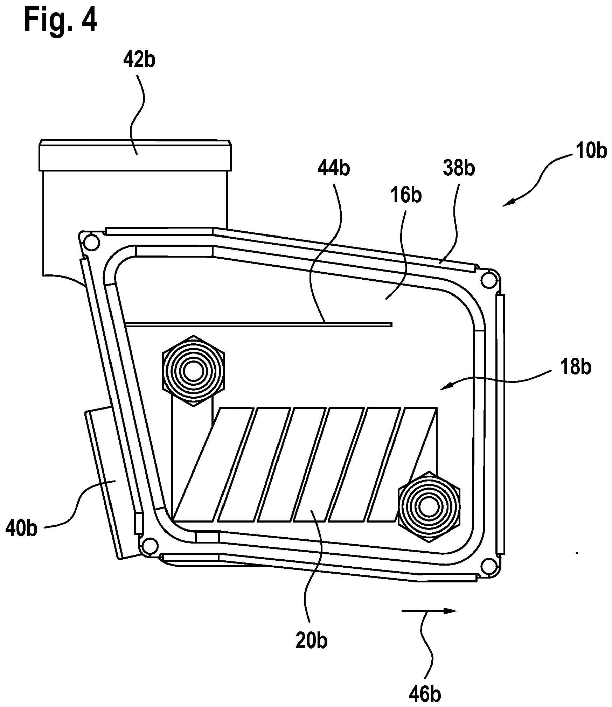

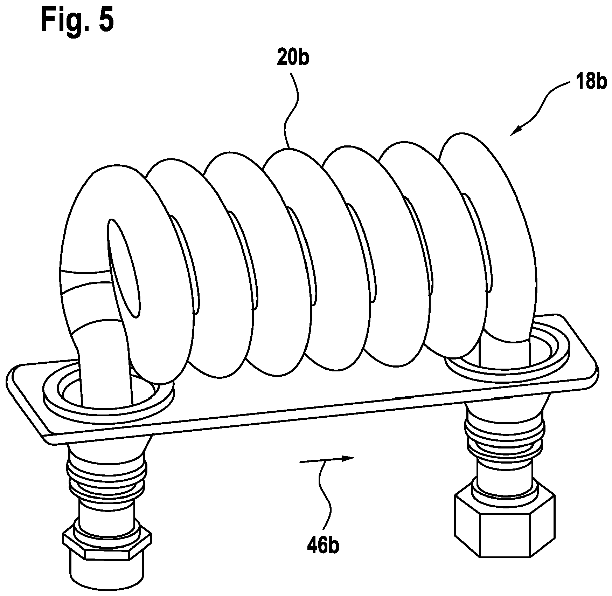

Die Abgasleitung 16a und der Sekundärwärmetauscher 18a sind in den Figuren 2 und 3 in einer perspektivischen Seitenansicht sowie in einer schematischen Seitenansicht dargestellt. Der Sekundärwärmetauscher 18a weist eine wendelförmige Fluidleitung 20a auf. Im vorliegenden Fall ist die wendelförmige Fluidleitung 20a als eine zu einer spirale gewundene Wasserleitung ausgebildet. Ferner ist im vorliegenden Fall die Fluidleitung 20a aus Aluminium ausgebildet. Die Fluidleitung 20a weist eine Länge von etwa 1,2 m auf. Ferner weist die Fluidleitung 20a einen Durchmesser von 16,5 mm auf. Der Durchmesser ist im vorliegenden Fall konstant. Zudem beschreibt die wendelförmige Fluidleitung 20a im vorliegenden Fall sieben Wendelumläufe, wobei ein Fachmann Geometrieparameter der wendelförmigen Fluidleitung 20a selbstverständlich anwendungsspezifisch anpassen wird. Ein Außendurchmesser einer von der wendelförmigen Fluidleitung 20a gebildeten Wendel entspricht zumindest im Wesentlichen einem Innendurchmesser der Abgasleitung 16a. Es sind aber, wie oben erwähnt, auch gänzlich andere Abmessungen einer wendelförmigen Fluidleitung denkbar. Zudem ist denkbar, eine Fluidleitung aus Kupfer und/oder aus Stahl, insbesondere aus Edelstahl, auszubilden (vgl. hierzu insbesondere auch das weitere Ausführungsbeispiel der Figuren 4 und 5).

Die wendelförmige Fluidleitung 20a ist zumindest teilweise in der Abgasleitung 16a angeordnet. Im vorliegenden Fall ist die wendelförmige Fluidleitung 20a vollständig innerhalb der Abgasleitung 16a angeordnet. Von dem Gasbrenner 12a erzeugtes Abgas strömt durch die Abgasleitung 16a an der wendelförmigen Fluidleitung 20a vorbei, wodurch ein Wärmeübertrag von dem Abgas auf die wendelförmige Fluidleitung 20a stattfindet. Es ist aber auch denkbar, dass eine wendelförmige Fluidleitung eine Abgasleitung abschnittsweise umgreift und/oder eine Abgasleitung innerhalb einer von einer wendelförmigen Fluidleitung gebildeten Wendel angeordnet ist. Insbesondere kann eine entsprechende Abgasleitung insbesondere zur Verbesserung eines Wärmeübertrags beispielsweise eine geriffelte und/oder gerillte und/oder wellige oder anders vergrößerte Oberfläche aufweisen, in deren Bereich die entsprechende wendelförmige Fluidleitung angeordnet ist.

Der Sekundärwärmetauscher 18a ist zu einem Vorerwärmen des Warmwassers und ggf. des Heizwassers vorgesehen. Im vorliegenden Fall weist der Sekundärwärmetauscher 18a eine Zuleitung 28a auf, die durch eine Wandung 30a der Abgasleitung 16a zu der wendelförmigen Fluidleitung 20a führt. Ferner weist der Sekundärwärmetauscher 18a eine Ableitung 32a auf, die durch die Wandung 30a der Abgasleitung 16a von der wendelförmigen Fluidleitung 20a wegführt. Die Zuleitung 28a ist mit einem nicht gezeigten Frischwasserzulauf des Gehäuses 22a verbunden. Die Ableitung 32a ist mit einer nicht dargestellten Zuleitung des Primärwärmetauschers 14a verbunden, welcher wiederum mit einem nicht gezeigten Warmwasserablauf des Gehäuses 22a verbunden ist. Nach dem Vorerwärmen im Sekundärwärmetauscher 18a wird das Warmwasser im Primärwärmetauscher 14a auf eine Zieltemperatur gebracht.

In dem Normalbetriebszustand erwärmt der Sekundärwärmetauscher 18a das Warmwasser und ggf. das Heizwasser um wenigstens 2°C, im vorliegenden Fall um etwa 3,2°C, und zwar insbesondere von 10,5°C auf 13,7°C. Ferner weist das Abgas in dem Normalbetriebszustand bei Eintritt in die Abgasleitung 16a eine Temperatur von etwa 70°C auf. Zudem weist das Abgas in dem Normalbetriebszustand nach Vorbeiströmen an der wendelförmigen Fluidleitung 18a und bei Austritt aus der Abgasleitung 16a eine Temperatur von etwa 51°C auf. "Warmwasser" bezeichnet dabei in diesem Zusammenhang auch Frischwasser vor dessen Erwärmung, da dieses nach dessen Erwärmung als Warmwasser zur Verfügung gestellt wird.

Der Sekundärwärmetauscher 18a ist in einem Bereich eines vertikal verlaufenden Abschnitts 34a der Abgasleitung 16a angeordnet. Im vorliegenden Fall ist der Sekundärwärmetauscher 18a vollständig innerhalb des vertikal verlaufenden Abschnitts 34a der Abgasleitung 16a angeordnet. Abgas strömt in dem Normalbetriebszustand von unten nach oben durch den vertikal verlaufenden Abschnitt 34a der Abgasleitung 16a.

Das Heizgerät 10a weist einen Kondensatablauf 24a auf, über welchen in der Abgasleitung 18a in einem Bereich 36a des Sekundärwärmetauschers 18a entstehendes Kondenswasser abführbar ist. Im vorliegenden Fall findet in einem Bereich des Primärwärmetauschers 14a eine erste Kondensation statt. Ferner findet in dem Bereich 36a des Sekundärwärmetauschers 18a eine zweite Kondensation statt. Es ist auch denkbar, dass lediglich in dem Bereich 36a des Sekundärwärmetauschers 18a eine Kondensation stattfindet. Entstehendes Kondenswasser tropft, insbesondere aufgrund der vertikalen Anordnung, durch das Abgasrohr 16a nach unten und kann über den Kondensatablauf 24a entfernt werden. Der Kondensatablauf 24a ist von außerhalb des Gehäuses 22a zugänglich, um eine einfache Wartung zu ermöglichen.

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch den Buchstaben b ersetzt.

Die Figur 4 zeigt eine Abgasleitung 16b und einen Sekundärwärmetauscher 18b eines nicht vollständig dargestellten weiteren Heizgeräts 10b in einer schematischen Seitenansicht. Die Figur 5 zeigt den Sekundärwärmetauscher 18b des weiteren Heizgeräts 10b in einer perspektivischen Darstellung.

Das weitere Heizgerät 10b ist grundsätzlich analog zu dem Heizgerät 10a des Ausführungsbeispiels der Figuren 1 bis 3 aufgebaut und umfasst einen nicht dargestellten Gasbrenner sowie einen dem Gasbrenner zugeordneten Primärwärmetauscher, der ebenfalls nicht gezeigt ist. Die Abgasleitung 16b ist dem Primärwärmetauscher nachgeschaltet.

Der Sekundärwärmetauscher 18b ist mit der Abgasleitung 16b thermisch verbunden und im vorliegenden Fall vollständig innerhalb dieser angeordnet. Der Sekundärwärmetauscher 18b weist eine wendelförmige Fluidleitung 20b auf. Die wendelförmige Fluidleitung 20b ist als eine Wasserleitung ausgebildet.

Die Abgasleitung 16b wird von einem Gehäuse 38b des Sekundärwärmetauschers 18b teilweise ausgebildet. Von dem Gasbrenner erzeugtes Abgas tritt in einem Normalbetriebszustand durch einen Abgaseinlass 40b des Gehäuses 38b des Sekundärwärmetauschers 18b in das Gehäuse 38b des Sekundärwärmetauschers 18b ein und strömt an der wendelförmigen Fluidleitung 20b vorbei. Das Gehäuse 38b des Sekundärwärmetauschers 18b weist ein plattenartiges Abgasleitelement 44b auf, welches einen Abgasstrom teilweise umlenkt. Das Abgas tritt durch einen Abgasauslass 42b des Gehäuses 38b des Sekundärwärmetauschers 18b aus diesem aus.

Der Sekundärwärmetauscher 18b ist zu einem Vorerwärmen eines rücklaufenden Heizwassers vorgesehen. In dem Normalbetriebszustand weist das Abgas in einem Bereich des Sekundärwärmetauschers 18b eine Temperatur von etwa 110°C bis 120°C auf.

Die wendelförmige Fluidleitung 20b ist zumindest teilweise aus Stahl ausgebildet. Im vorliegenden Fall ist die wendelförmige Fluidleitung 20b aus Edelstahl ausgebildet. Die wendelförmige Fluidleitung 20b ist zumindest teilweise makroskopisch verformbar ausgebildet. Die wendelförmige Fluidleitung 20b ist teilweise biegsam. Insbesondere kann die wendelförmige Fluidleitung 20b entlang ihrer Längsrichtung 46b gestaucht und/oder gedehnt werden.

Bei einer Herstellung des Heizgeräts 10b, insbesondere bei einer Montage des Sekundärwärmetauschers 18b beziehungsweise der wendelförmigen Fluidleitung 20b wird die wendelförmige Fluidleitung 20b zumindest vorübergehend makroskopisch verformt. Beispielsweise wird die wendelförmige Fluidleitung 20b zu einem Einführen in das Gehäuse 38b des Sekundärwärmetauschers 18b und/oder zu einem Positionieren innerhalb des Sekundärwärmetauschers 18b vorübergehend entlang ihrer Längsrichtung 46b gestaucht. Anschließend wird die wendelförmige Fluidleitung 20b wieder entlastet. Daraufhin nimmt die wendelförmige Fluidleitung 20b ihre ursprüngliche Geometrie ein, in welcher sie anschließend fest montiert wird. Es ist auch denkbar, dass eine wendelförmige Fluidleitung permanent gestaucht oder gestreckt oder verbogen oder anders verformt verbaut wird. Insbesondere kann eine wendelförmige Fluidleitung einer bestimmten Länge auf diese Weise in unterschiedlichen Konfigurationen verbaut werden, insbesondere in unterschiedlich gestreckten oder gestauchten Zuständen. Zudem ist die gezeigte wendelförmige Geometrie der wendelförmigen Fluidleitung 20b lediglich exemplarisch zu verstehen. Aufgrund der Verformbarkeit der Fluidleitung 20b kann diese in nahezu beliebige Geometrien gebogen werden, insbesondere bereits bei ihrer Herstellung. Derartige Geometrien können beispielsweise Doppelwendel, Wendel mit veränderlichem Querschnitt, verschlungene kurvige Verläufe, ineinander liegend gedrehte Schrauben oder dergleichen mehr umfassen.

Die Verwendung von Edelstahl ermöglicht dabei eine kostengünstige Herstellung der wendelförmigen Fluidleitung 20b, da diese bei der Herstellung einfach in Form gebogen werden kann. Ferner ermöglicht, wie erwähnt, die erzielte Verformbarkeit der wendelförmigen Fluidleitung 20b deren einfache Montage. Selbstverständlich ist denkbar, eine verformbare und/oder zumindest teilweise biegsame wendelförmige Fluidleitung aus einem anderen geeigneten Material auszubilden. Außerdem ist denkbar, eine makroskopisch verformbare wendelförmige Fluidleitung analog zu der wendelförmigen Fluidleitung 20b für einen Sekundärwärmetauscher analog zu dem Sekundärwärmetauscher 18a des Ausführungsbeispiels der Figuren 1 bis 3 zu verwenden.

## Patentansprüche

1. Heizgerät, insbesondere Kondensationsboiler, insbesondere Brennwertkessel, mit zumindest einem Gasbrenner (12a), mit zumindest einem dem Gasbrenner (12a) zugeordneten Primärwärmetauscher (14a) und mit zumindest einer dem Primärwärmetauscher (14a) nachgeschalteten Abgasleitung (16a; 16b), **gekennzeichnet durch** zumindest einen mit der Abgasleitung (16a; 16b) thermisch verbundenen Sekundärwärmetauscher (18a; 18b) mit zumindest einer wendelförmigen Fluidleitung (20a; 20b).

2. Heizgerät nach Anspruch 1, **dadurch gekennzeichnet, dass** die wendelförmige Fluidleitung (20a; 20b) zumindest teilweise in der Abgasleitung (16a; 16b) angeordnet ist.

3. Heizgerät nach Anspruch 1 oder 2, **gekennzeichnet durch** zumindest ein Gehäuse (22a), welches den Gasbrenner (12a), den Primärwärmetauscher (14a) und den Sekundärwärmetauscher (18a) zumindest teilweise umschließt.

4. Heizgerät nach einem der vorhergehenden Ansprüche, **dadurch gekennzeichnet, dass** der Sekundärwärmetauscher (18a; 18b) zu einem Vorerwärmen eines Heizwassers und/oder eines Warmwassers vorgesehen ist.

5. Heizgerät nach Anspruch 4, **dadurch gekennzeichnet, dass** in zumindest einem Normalbetriebszustand der Sekundärwärmetauscher (18a; 18b) das Heizwasser und/oder das Warmwasser um wenigstens 2°C erwärmt.

6. Heizgerät nach einem der vorhergehenden Ansprüche, **dadurch gekennzeichnet, dass** der Sekundärwärmetauscher (18a) in einem Bereich eines vertikal verlaufenden Abschnitts (34a) der Abgasleitung (16a) angeordnet ist.

7. Heizgerät nach einem der vorhergehenden Ansprüche, **gekennzeichnet durch** zumindest einen Kondensatablauf (24a), über welchen in der Abgasleitung (16a) in einem Bereich (36a) des Sekundärwärmetauschers (18a) entstehendes Kondenswasser abführbar ist.

8. Heizgerät nach einem der vorhergehenden Ansprüche, **dadurch gekennzeichnet, dass** die wendelförmige Fluidleitung (20b) zumindest teilweise aus Stahl ausgebildet ist.

9. Heizgerät nach einem der vorhergehenden Ansprüche, **dadurch gekennzeichnet, dass** die wendelförmige Fluidleitung (20b) zumindest teilweise makroskopisch verformbar ausgebildet ist.

10. Verfahren zur Herstellung eines Heizgeräts (10) nach Anspruch 9, **dadurch gekennzeichnet, dass** die wendelförmige Fluidleitung (20b) bei einem Einbau zumindest vorübergehend makroskopisch verformt wird.
